# EUROPEAN PATENT SPECIFICATION

(11) **EP 4 000 361 B1**
(45) Date of publication and mention of the grant of the patent: **24.07.2024**
(21) Application number: 21206826.6
(22) Date of filing: 08.11.2021
(51) Int. Cl.: A01B 63/111, A01B 79/00, A01B 69/04

(54) **AUTOMATED IMPLEMENT HEIGHT CONTROL FOR TERRAIN**
AUTOMATISIERTE GERÄTEHÖHENSTEUERUNG FÜR GELÄNDE
RÉGLAGE AUTOMATIQUE DE LA HAUTEUR D'UN OUTIL POUR TERRAIN

(30) Priority: 19.11.2020 US 202016952866
(43) Date of publication of application: 25.05.2022
(73) Proprietor: Deere & Company, Moline, IL 61265 (US)
(72) Inventor: MCKINZIE, Kyle K, 68163 Mannheim (DE)
(74) Representative: Stein, Stefan

(56) References cited:
- EP-A1- 3 141 096
- EP-A1- 3 300 558
- EP-A1- 3 305 052
- EP-A2- 3 300 570
- WO-A1-2016/192973
- US-A1- 2016 011 597

## Description

The disclosure generally relates to an agricultural work system.

### Background

An agricultural work system may include a traction unit, e.g., a tractor, and a drawn implement, e.g., a mower conditioner. The drawn implement is attached to a rearward end of the traction unit in a manner that allows the drawn implement to move relative to the traction unit as the agricultural work system moves across a ground surface. For example, when the agricultural work system traverses over uneven terrain features in the ground surface, such as localized mounds, shallow ditches, etc., the traction unit and the drawn implement may move relative to each other so that the drawn implement may follow the general contour our profile of the ground surface. However, in certain situations and/or conditions, the uneven terrain features in the ground surface may cause the drawn implement to contact the ground surface. Unintended contact between the drawn implement and the ground surface is undesirable and may potentially damage or reduce the life expectancy of the drawn implement.

EP 3 305 052 A1 describes a combination of a tractor and a plow. The pitch and roll of the tractor are sensed and the ground contour in forward and lateral direction is derived therefrom in order to control the position of a plow in a desired height and parallel to the ground to achieve a good tillage quality. A similar arrangement is shown in WO 2016/192973 A1 where the sensed terrain shape is used to control the pitch of the plow, while the working depth depends on the draft force.

### SUMMARY

The present invention is defined by the claims. An agricultural work system is provided. The agricultural work system includes a traction unit having a frame supported by a first front ground engaging element and a first rear ground engaging element. The first front ground engaging element and the first rear ground engaging element are spaced apart from each other along a central longitudinal axis of the frame to define a wheelbase therebetween. A pitch sensor is positioned to sense a pitch angle of the frame about a central transverse axis of the frame relative to a horizontal reference plane. A drawn mowing implement is attached to a rearward end of the traction unit relative to a forward direction of travel of the traction unit. The drawn implement includes a support structure having a ground clearance between the support structure and a ground surface. An adjustable component is attached to at least one of the traction unit and the drawn implement. The adjustable component is selectively controllable to adjust the ground clearance of the drawn implement. A controller is in communication with the pitch sensor and the adjustable component. The controller includes a processor and a memory having a terrain tracking algorithm stored thereon. The processor is operable to execute the terrain tracking algorithm to receive a pitch signal from the pitch sensor indicating the pitch angle of the frame as the traction unit moves over a terrain feature in the ground surface. An elevation profile of the ground surface including the terrain feature is generated from the pitch angle of the frame and the wheelbase of the traction unit. The adjustable component may then be controlled to adjust the ground clearance of the drawn implement to maintain a minimum ground clearance between the support structure of the drawn implement and the ground surface as the drawn implement moves over the terrain feature in the ground surface.

In one implementation of the disclosure, the adjustable component may include, but is not limited to, a hitch system, such as a three-point hitch system for example, interconnecting the traction unit and the drawn implement. In other implementations of the disclosure, the adjustable component may include, but is not limited to, a height adjustment system or linkage that adjusts a position of a trailing wheel of the drawn implement relative to the support structure of the drawn implement, thereby adjusting the ground clearance of the drawn implement. It should be appreciated that the adjustable component may be configured in some other way that is capable of adjusting the ground clearance of the drawn implement but that is not described herein.

In one aspect of the disclosure, the adjustable component may include a linear actuator, such as but not limited to a hydraulic cylinder that is controllable or actuatable by the controller to extend or retract in response to a hydraulic signal. The controller may actuate the linear actuator, e.g., the hydraulic cylinder, to adjust the ground clearance of the drawn implement.

In one aspect of the disclosure, the processor is operable to execute the terrain tracking algorithm to define at least one implement dimension relative to the traction unit. The implement dimension may include, but is not limited to, a distance between a rear axle of the traction unit and a drawbar pin attaching the drawn implement to the traction unit, a distance from the drawbar pin to a trailing wheel or axle of the drawn implement, a distance between a rear axle of the traction unit and a trailing wheel or axle of the drawn implement, etc.

In one aspect of the disclosure, the processor is operable to execute the terrain tracking algorithm to calculate a desired implement position relative to the frame. The desired implement position relative to the frame may provide the minimum ground clearance as the drawn implement moves over the terrain feature in the ground surface. The desired implement position may be calculated based on the elevation profile of the ground surface and the at least one implement dimension. The controller may then control the adjustable component to move the drawn implement into the desired implement position.

In one implementation of the disclosure, the traction unit includes a second front ground engaging element laterally offset from the first front ground engaging element across the central longitudinal axis of the frame. The first front ground engaging element and the second ground engaging element define a front track width therebetween. A second rear ground engaging element is laterally offset from the first rear ground engaging element across the central longitudinal axis. The first rear ground engaging element and the second rear ground engaging element define a rear track width therebetween. In one implementation, the first track width and the second track width are identical. In other implementations, the first track width and the second track width are different.

In one aspect of the disclosure, the agricultural work system may include a roll sensor that is positioned to sense a roll angle of the frame about the central longitudinal axis of the frame relative to the horizontal reference plane. The processor is operable to execute the terrain tracking algorithm to receive a roll signal from the roll sensor indicating the roll angle of the frame as the traction unit moves over the terrain feature in the ground surface. The controller may then generate the elevation profile of the ground surface including the terrain feature from the roll angle of the frame and at least one of the front track width and the rear track width of the traction unit. In one implementation, the controller may generate a three-dimensional profile of the ground surface including the terrain feature from the pitch angle of the frame, the roll angle of the frame, the wheelbase of the traction unit, and at least one of the front track width and the rear track width of the traction unit.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic side view of an agricultural work system showing a traction unit moving over a terrain feature in a ground surface.
FIG. 2 is a schematic top plan view of the traction unit.
FIG. 3 is a schematic front plan view of the traction unit showing a roll angle.
FIG. 4 is a schematic side view of the agricultural work system showing a drawn implement moving over a terrain feature and contacting a ground surface.
FIG. 5 is a schematic perspective view of a three-dimensional profile of the ground surface.
FIG. 6 is a schematic two-dimensional profile of the ground surface along cut line 6-6 shown in FIG. 5.
FIG. 7 is a schematic side view of the agricultural work system showing the drawn implement moving over the terrain feature with an adjustable component actuated to provide a minimum ground clearance.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

Referring to the Figures, wherein like numerals indicate like parts throughout the several views, an agricultural work system 20 is generally shown at 20. The agricultural work system 20 includes a traction unit 22 and a drawn implement 24 attached to a rearward end 26 of the traction unit 22, relative to a forward direction of travel 28 of the traction unit 22. In the example implementation shown in the Figures and described herein, the traction unit 22 is configured as a tractor. However, it should be appreciated that the traction unit 22 may be configured differently than the example implementation shown in the figures and described herein, and may include some other moveable platform having a prime mover operable to provide motive power to the traction unit 22 and the drawn implement 24.

The traction unit 22 includes a frame 30 supported by a plurality of ground engaging elements 40, 42, 44, 46. The frame 30 extends along a central longitudinal axis 32 between a forward end 34 and the rearward end 26. The frame 30 spans a width measured along a central transverse axis 36. The central transverse axis 36 is perpendicular to the central longitudinal axis 32. The central longitudinal axis 32 and the central transverse axis 36 cross at a center of gravity 38 of the traction unit 22.

The individual ground engaging elements 40, 42, 44, 46 may include, but are not limited to, a wheel/tire combination and/or a track system. The ground engaging elements 40, 42, 44, 46 may be arranged in pairs, e.g., a left and a right element, and may include a total number of elements equal to two, four, six, etc. In the example implementation shown in the figures and described herein, the traction unit 22 includes four ground engaging elements 40, 42, 44, 46, i.e., a first front ground engaging element 40, a second front ground engaging element 42, a first rear ground engaging element 44, and a second rear ground engaging element 46.

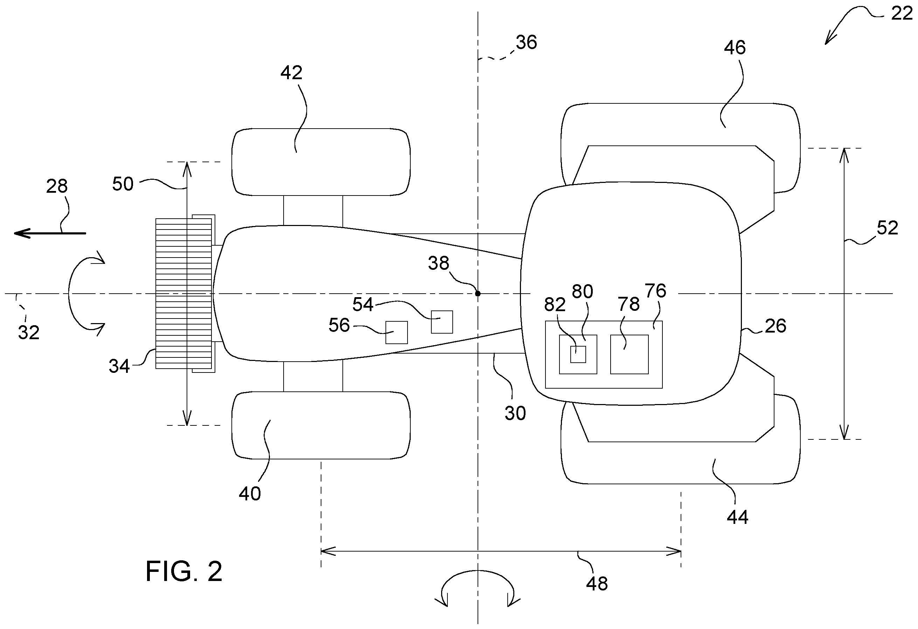

Referring to FIG. 2, the first front ground engaging element 40 and the first rear ground engaging element 44 are spaced apart from each other along the central longitudinal axis 32 of the frame 30 to define a wheelbase 48 therebetween. Similarly, the second front ground engaging element 42 and the second rear engaging element are also spaced apart from each other along the central longitudinal axis 32 by the wheelbase 48. As understood by those skilled in the art, the wheelbase 48 is generally measured between a center of each respective wheel along the central longitudinal axis 32.

The first front ground engaging element 40 and the second front ground engaging element 42 are laterally offset from each other across the central longitudinal axis 32 to define a front track width 50 therebetween. Similarly, the first rear ground engaging element 44 and the second rear ground engaging element 46 are laterally offset from each other across the central longitudinal axis 32 to define a rear track width 52 therebetween. As understood by those skilled in the art, a track width is generally measured between respective centerlines of laterally adjacent pairs of ground engaging elements 40, 42, 44, 46. In some implementations, the front track width 50 may be identical to the rear track width 52. However, in other implementations, the front track width 50 may differ from the rear track width 52. For example, the front track width 50 may be greater than the rear track width 52, or the front track width 50 may be less than the rear track width 52.

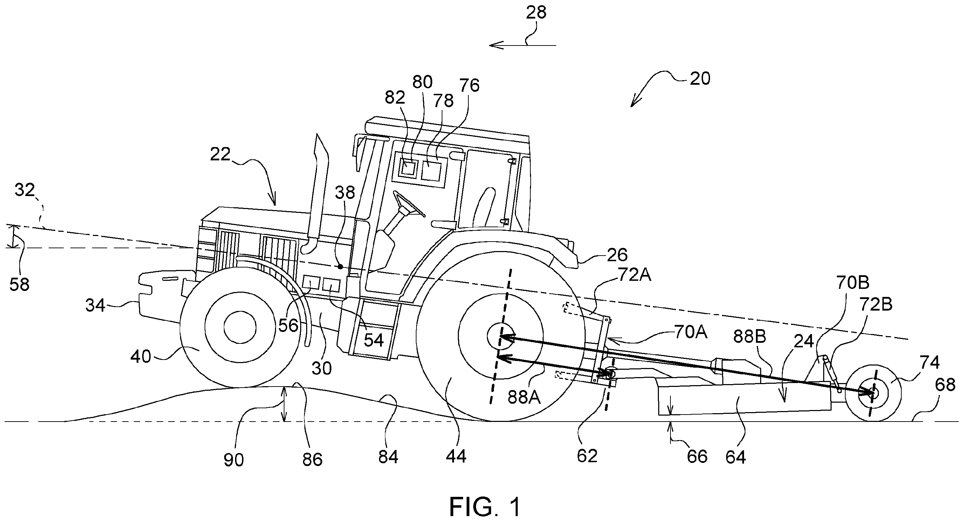

The traction unit 22 includes a pitch sensor 54 and a roll sensor 56. Referring to FIG. 1, the pitch sensor 54 is positioned to sense a pitch angle 58 of the frame 30 about the central transverse axis 36 of the frame 30 relative to a horizontal reference plane. The horizontal reference plane is an imaginary plane that is arranged orthogonal to the direction of gravity. As generally understood by those skilled in the art, the pitch angle 58 is defined as the vertical angle formed between the central longitudinal axis 32 of the frame 30 and the horizontal reference plane. The pitch angle 58 may be positive, indicating that the forward end 34 of the frame 30 of the traction unit 22 is angled vertically upward, or negative indicating that the forward end 34 of the frame 30 of the traction unit 22 is angled vertically downward.

The pitch sensor 54 may include a device capable of sensing data related to the pitch angle 58 of the traction unit 22, such as but not limited to an inclinometer or other similar device. The pitch sensor 54 outputs a pitch signal including the sensed data related to the pitch angle 58. It should be appreciated that the pitch angle 58 of the traction unit 22 may change with movement, and that the pitch signal will change accordingly with the change in the pitch angle 58 as the traction unit 22 moves. As such, it should be appreciated that the pitch signal may include a continuous or cyclical signal indicating the pitch angle 58 of the traction unit 22 at a specific location and at a specific time.

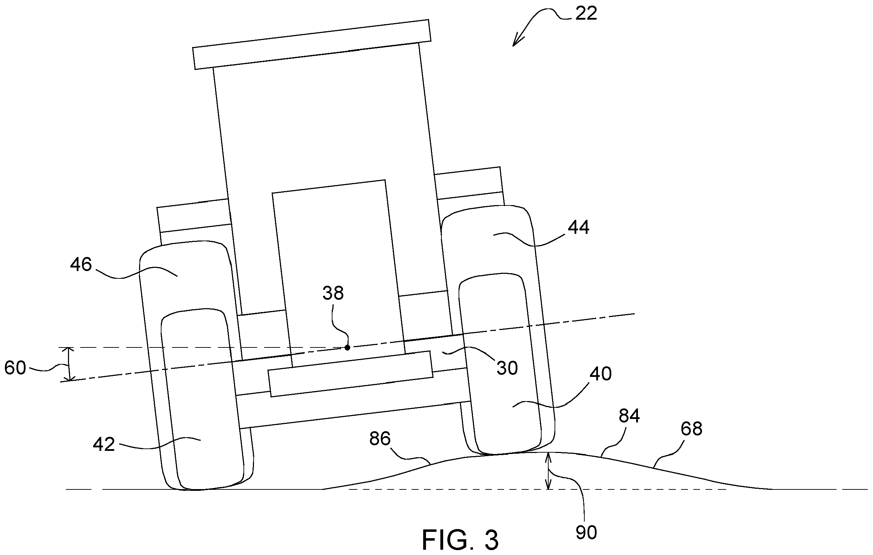

Referring to FIG. 3, the roll sensor 56 is positioned to sense a roll angle 60 of the frame 30 about the central longitudinal axis 32 of the frame 30 relative to the horizontal reference plane. As generally understood by those skilled in the art, the roll angle 60 is defined as the acute angle between the central transverse axis 36 of the frame 30 and the horizontal reference plane. The roll angle 60 may be positive, indicating that the left side of the frame 30 of the traction unit 22 is angled vertically upward and the right side of the frame 30 of the traction unit 22 is angled vertically downward, or negative indicating that the left side of the frame 30 of the traction unit 22 is angled vertically downward and the right side of the traction unit 22 is angled vertically upward

The roll sensor 56 may include a device capable of sensing data related to the roll angle 60 of the traction unit 22, such as but not limited to an inclinometer or other similar device. The roll sensor 56 outputs a roll signal including the sensed data related to the roll angle 60. It should be appreciated that the roll angle 60 of the traction unit 22 may change with movement, and that the roll signal will change accordingly with the change in the roll angle 60 as the traction unit 22 moves. As such, it should be appreciated that the roll signal may include a continuous or cyclical signal indicating the roll angle 60 of the traction unit 22 at a specific location and at a specific time.

Referring to FIGS. 1 and 2, the drawn implement 24 is attached to the rearward end 26 of the traction unit 22 relative to the forward direction of travel 28 of the traction unit 22. The drawn implement 24 includes a mowing implement.

The drawn implement 24 may be attached to the traction unit 22 in any suitable manner via an implement connection 62. For example, implement connection 62 may include, but is not limited to, a draw bar/pin connection, a ball/coupler connection, a three-point hitch system 70A, etc. These and other similar types of implement connection 62s are known to those skilled in the art, and are therefore not described in greater detail herein.

The drawn implement 24 includes a support structure 64. The configuration of the support structure 64 varies based on the type and configuration of the drawn implement 24. The support structure 64 supports the various components of the drawn implement 24. The drawn implement 24 includes or exhibits a ground clearance 66 measured between the support structure 64 and the ground surface 68.

The agricultural work system 20 further includes an adjustable component 70A, 70B. The adjustable component 70A, 70B is attached to at least one of the traction unit 22 and the drawn implement 24. The adjustable component 70A, 70B is selectively controllable by a controller 76 to adjust the ground clearance 66 of the drawn implement 24. The adjustable component 70A, 70B may include any feature or component that is moveable and that changes the ground clearance 66 of the drawn implement 24.

It should be appreciated that the agricultural work system 20 may include multiple adjustable components 70A, 70B. For example, in the implementation shown in the Figures and described herein, the adjustable component 70A, 70B may include the implement connection 62 that interconnects or attaches the traction unit 22 and the drawn implement 24. For example, the implement connection 62 may include a three-point hitch system 70A. As understood by those skilled in the art, the three-point hitch system 70A includes three links extending from the traction unit 22, and which are attached to the drawn implement 24. The upper link may include a linear actuator 72A, such as but not limited to a hydraulic cylinder, that is selectively controllable to extend and retract in response to a hydraulic signal. Extension and retraction of the linear actuator 72A lowers or raises the drawn implement 24 respectively, thereby changing the ground clearance 66 of the drawn implement 24. In other embodiments, the linear actuator 72A may include an electric actuator or other similar device.

The adjustable component may alternatively include trailing support height adjustment system 70B. In some implementations, the drawn implement 24 may include one or more trailing supports 74, such as but not limited a tire/wheel combination or a skid support. The trailing support 74 at least partially supports the support structure 64 of the drawn implement 24. The trailing support height adjustment system 70B may be configured to adjust the position of the support structure 64 relative to the trailing support 74 to change the ground clearance 66. The trailing support height adjustment system 70B may include, but is not limited to, a moveable linkage system that is controlled by an actuator, such as but not limited to a linear actuator 72B. The linear actuator 72B may extend and retract to change the position of the trailing support 74 relative to the support structure 64, thereby changing the ground clearance 66 of the drawn implement 24.

It should be appreciated that the adjustable component 70A, 70B may be configured differently than the example implementations described herein, and should be interpreted broadly to include any system or structure capable of selective control that is capable of raising and/or lowering the drawn implement 24 to change the ground clearance 66 of the drawn implement 24.

The traction unit 22 further includes the controller 76. The controller 76 is in communication with the pitch sensor 54, the roll sensor 56, and the adjustable component 70A, 70B. The controller 76 is operable to receive the pitch signals from the pitch sensor 54, receive roll signals from the roll sensor 56, and communicate or output a control signal to the adjustable component 70A, 70B. While the controller 76 is generally described herein as a singular device, it should be appreciated that the controller 76 may include multiple devices linked together to share and/or communicate information therebetween. Furthermore, it should be appreciated that the controller 76 may be located on the traction unit 22 or located remotely from the controller 76, such as on the drawn implement 24.

The controller 76 may alternatively be referred to as a computing device, a computer, a control unit, a control module, a module, etc. The controller 76 includes a processor 78, a memory 80, and all software, hardware, algorithms, connections, sensors, etc., necessary to manage and control the operation of the adjustable component 70A, 70B. As such, a method may be embodied as a program or algorithm operable on the controller 76. It should be appreciated that the controller 76 may include any device capable of analyzing data from various sensors, comparing data, making decisions, and executing the required tasks.

As used herein, "controller 76" is intended to be used consistent with how the term is used by a person of skill in the art, and refers to a computing component with processing, memory, and communication capabilities, which is utilized to execute instructions (i.e., stored on the memory or received via the communication capabilities) to control or communicate with one or more other components. In certain embodiments, the controller 76 may be configured to receive input signals in various formats (e.g., hydraulic signals, voltage signals, current signals, CAN messages, optical signals, radio signals), and to output command or communication signals in various formats (e.g., hydraulic signals, voltage signals, current signals, CAN messages, optical signals, radio signals).

The controller 76 may be in communication with other components on the traction unit 22 and/or the drawn implement 24, such as hydraulic components, electrical components, and operator inputs within an operator station of the traction unit 22. The controller 76 may be electrically connected to these other components by a wiring harness such that messages, commands, and electrical power may be transmitted between the controller 76 and the other components. Although the controller 76 is referenced in the singular, in alternative embodiments the configuration and functionality described herein can be split across multiple devices using techniques known to a person of ordinary skill in the art.

The controller 76 may be embodied as one or multiple digital computers or host machines each having one or more processors, read only memory (ROM), random access memory (RAM), electrically-programmable read only memory (EPROM), optical drives, magnetic drives, etc., a high-speed clock, analog-to-digital (A/D) circuitry, digital-to-analog (D/A) circuitry, and any required input/output (I/O) circuitry, I/O devices, and communication interfaces, as well as signal conditioning and buffer electronics.

The computer-readable memory 80 may include any non-transitory/tangible medium which participates in providing data or computer-readable instructions. The memory 80 may be non-volatile or volatile. Non-volatile media may include, for example, optical or magnetic disks and other persistent memory. Example volatile media may include dynamic random access memory (DRAM), which may constitute a main memory. Other examples of embodiments for memory include a floppy, flexible disk, or hard disk, magnetic tape or other magnetic medium, a CD-ROM, DVD, and/or any other optical medium, as well as other possible memory devices such as flash memory.

The controller 76 includes the tangible, non-transitory memory 80 on which are recorded computer-executable instructions, including a terrain tracking algorithm 82. The processor 78 of the controller 76 is configured for executing the terrain tracking algorithm 82. The terrain tracking algorithm 82 implements a method of controlling the traction unit 22, described in detail below. Generally, the method includes mapping an elevation profile 84 of the ground surface 68, including a terrain feature 86, as the traction unit 22 moves over the terrain feature 86. Once the elevation profile 84 of the terrain feature 86 is mapped, the controller 76 actuates the adjustable component 70A, 70B to change the ground clearance 66 of the drawn implement 24 as the drawn implement 24 moves over the terrain feature 86, so that the drawn implement 24 does not contact the terrain feature 86.

The process includes defining at least the wheelbase 48 of the traction unit 22. In some embodiments, the process may further include defining the track width 50, 52 of the traction unit 22. The wheelbase 48 and the track width 50, 52 of the traction unit 22 may be defined in a suitable manner. For example, the wheelbase 48 and the track width 50, 52 may be pre-programmed into the controller 76 during manufacture of the traction unit 22. In other implementations, the controller 76 may prompt an operator to manually input the wheelbase 48 and the track width 50, 52. In other implementations, the controller 76 may prompt the operator to enter the make and model of the traction unit 22, after which the controller 76 may reference a look-up table, either saved in the memory 80 or available through a network or Cloud connection, to determine the wheelbase 48 and the track width 50, 52. It should be appreciated that the wheelbase 48 and the track width 50, 52 of the traction unit 22 may be determined in some other manner not described herein.

Additionally, the process may include defining at least one implement dimension 88A, 88B relative to the traction unit 22. The implement dimension 88A, 88B may include a dimension of the drawn implement 24 and/or a relative positioning of the drawn implement 24 relative to the traction unit 22. For example, the implement dimension may include a distance 88A between a rear axle of the traction unit 22 and a connecting pin of a drawbar/pin connection that secures the drawn implement 24 to a draw bar of the traction unit 22. Alternatively, the implement dimension may include a distance 88B from the rear axle of the traction unit 22 to the trailing support 74 of the drawn implement 24. It should be appreciated that the implement dimension 88A, 88B may differ from the example implementations described herein, and that the implement dimension 88A, 88B is dependent upon the specific type of connection between the traction unit 22 and the drawn implement 24, and the specific type and/or configuration of the drawn implement 24. As such, only a couple example implementations of the implement dimension 88A, 88B are described herein. However, the implement dimension 88A, 88B should be interpreted broadly and include dimensions other than the example dimensions described herein.

The implement dimension 88A, 88B may be defined in a suitable manner. For example, the controller 76 may prompt an operator to manually input the implement dimension 88A, 88B. In other implementations, the controller 76 may prompt the operator to enter the make and model of the drawn implement 24, after which the controller 76 may reference a look-up table, either saved in the memory 80 or available through a network or Cloud connection, to determine the implement dimension 88A, 88B. It should be appreciated that the implement dimension 88A, 88B of the drawn implement 24 may be determined in some other manner not described herein.

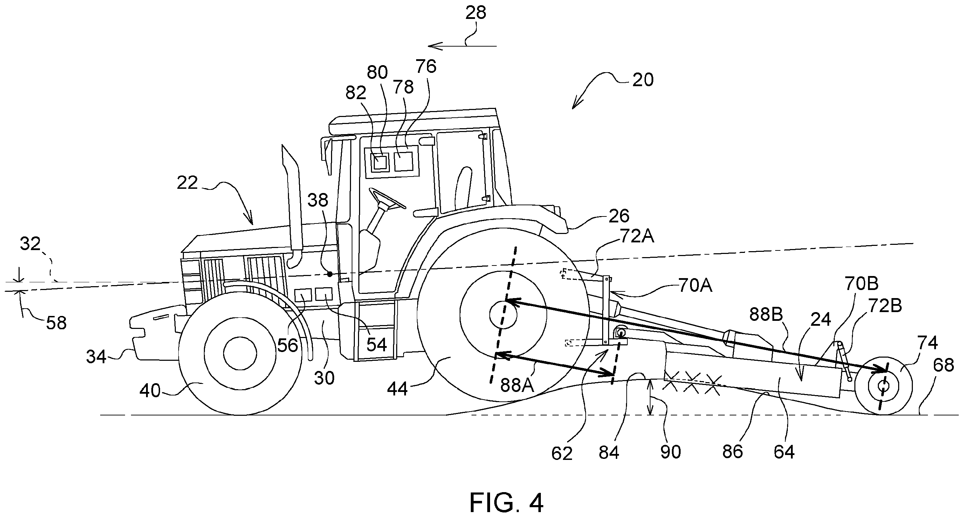

Once the controller 76 has defined the wheelbase 48, the track width 50, 52 and the implement dimension 88A, 88B, the traction unit 22 may begin moving over the ground surface 68. If the ground surface 68 is level or generally planar, then the ground clearance 66 of the drawn implement 24 will remain constant, and the drawn implement 24 will not contact the ground surface 68. However, if the ground surface 68 is uneven, or includes elevated or depressed terrain features 86, then the ground surface 68 will vary as the drawn implement 24 moves over these terrain features 86. If a height 90 or depth of the terrain feature 86 is significant, then the drawn implement 24 may contact the ground surface 68 as the drawn implement 24 moves over the terrain feature 86, such as shown in FIG. 4. For example, referring to FIG. 4, the ground surface 68 includes a raised terrain feature 86. If the raised terrain feature 86 includes a height 90 that is greater than the ground clearance 66, then the drawn implement 24 may contact the ground surface 68 as the drawn implement 24 moves over the raised terrain feature 86.

As the traction unit 22 moves over the terrain feature 86, the controller 76 receives the pitch signal from the pitch sensor 54. As described above, the pitch signal indicates or includes data related to the pitch angle 58 of the frame 30 as the traction unit 22 moves over the terrain feature 86 in the ground surface 68. Additionally, the controller 76 may receive the roll signal from the roll sensor 56. As described above, the roll signal indicating or includes data related to the roll angle 60 of the frame 30 as the traction unit 22 moves over the terrain feature 86 in the ground surface 68.

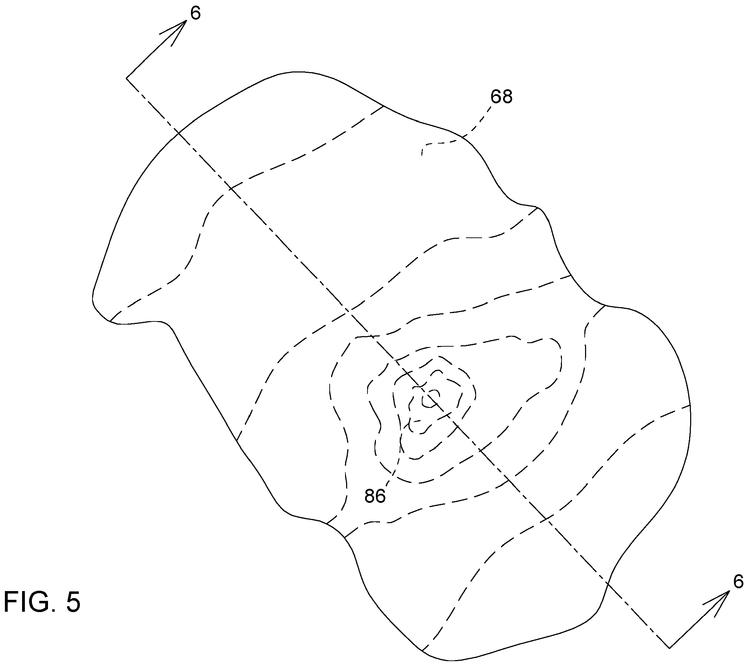

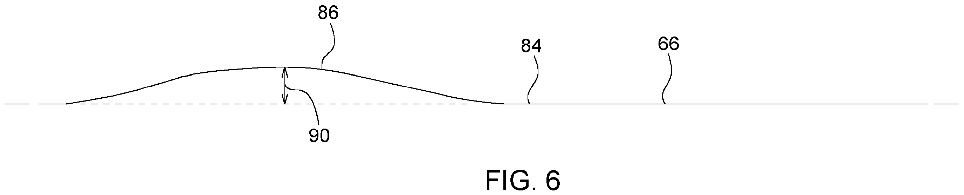

Based on the pitch signal and the wheelbase 48 of the traction unit 22, the controller 76 may generate a two-dimensional elevation profile 84 of the ground surface 68 including the terrain feature 86. As shown in FIG. 5, based on the pitch signal, the roll signal, the wheelbase 48, and the track width 50, 52, the controller 76 may generate a three-dimensional elevation profile 84 of the ground surface 68 including the terrain feature 86. The two-dimensional elevation profile 84 of the ground surface 68 is generally shown in FIG. 6. It should be appreciated that the controller 76 may use additional inputs to calculate the elevation profile 84, such as but not included to, the ground speed of the traction unit 22 or Global Positioning Satellite (GPS) data related to the location of the traction unit 22. It should be appreciated that the pitch angle 58 and the wheelbase 48 may be used to generate the elevation profile 84 in the longitudinal direction of the traction unit 22, i.e., the direction of travel 28, whereas the roll angle 60 and the track width 50, 52 may be sued to generate the elevation profile 84 in the transverse direction of the traction unit 22, i.e., the perpendicular to the direction of travel 28.

Once the controller 76 has generated the elevation profile 84, including the terrain feature 86, the controller 76 may then calculate a desired implement position relative to the frame 30 to provide the minimum ground clearance 66. The desired implement position may be calculated based on the elevation profile 84 of the ground surface 68 and the at least one implement dimension 88A, 88B. For example, knowing the implement dimension 88A, 88B, the controller 76 may determine the ground clearance 66 for a given position of the adjustable component 70A, 70B. In other words, the controller 76 may determine how much change in the ground clearance 66 occurs with a given amount of change or a given position of the adjustable component 70A, 70B. Knowing these variables, the controller 76 may calculate the desired implement position to clear or avoid the terrain feature 86, and the required position or movement of the adjustable component 70A, 70B to position the drawn implement 24 in the desired implement position.

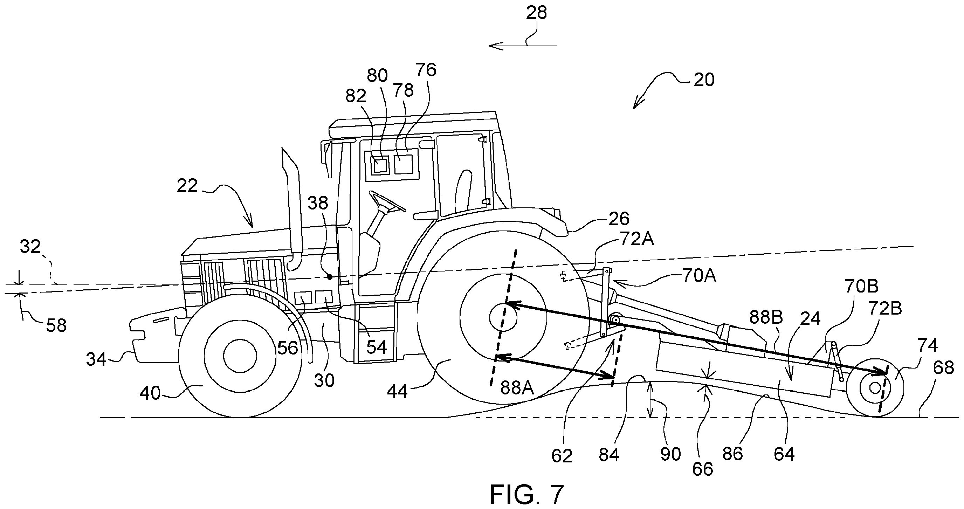

Once the controller 76 has determined the desired implement position to clear the terrain feature 86, the controller 76 may actuate or control the adjustable component 70A, 70B accordingly to move the drawn implement 24 into the desired implement position, thereby adjusting the ground clearance 66 of the drawn implement 24. Referring to FIG. 7, the ground clearance 66 of the drawn implement 24 is adjusted as the drawn implement 24 moves over the terrain feature 86, thereby avoiding contact with the terrain feature 86 and/or maintaining a minimum ground clearance 66 between the support structure 64 of the drawn implement 24 and the ground surface 68.

As noted above, the adjustable component 70A, 70B may include the linear actuator 72A, 72B, such as a but not limited to a hydraulic cylinder. In such implementations, controlling the adjustable component 70A, 70B may include one of extending or retracting the linear actuator 72A, 72B to adjust the ground clearance 66 of the drawn implement 24. It should be appreciated that once the drawn implement 24 is moved past the terrain feature 86, the controller 76 may move the adjustable component 70A, 70B back to an initial or neutral position to re-establish the standard ground clearance 66 of the drawn implement 24.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. An agricultural work system comprising:
a traction unit (22) having a frame (30) supported by a first front ground engaging element (40) and a first rear ground engaging element (44), wherein the first front ground engaging element (40) and the first rear ground engaging element (44) are spaced apart from each other along a central longitudinal axis (32) of the frame (30) to define a wheelbase (48) therebetween;
a pitch sensor (54) positioned to sense a pitch angle (58) of the frame (30) about a central transverse axis (36) of the frame (30) relative to a horizontal reference plane;
a drawn mowing implement (24) attached to a rearward end (26) of the traction unit (22) relative to a forward direction of travel (28) of the traction unit (22), wherein the drawn implement (24) includes a support structure (64) having a ground clearance (66) between the support structure (64) and a ground surface (68);
an adjustable component (70A, 70B) attached to at least one of the traction unit (22) and the drawn implement (24), wherein the adjustable component (70A, 70B) is selectively controllable to adjust the ground clearance (66) of the drawn implement (24);
a controller (76) in communication with the pitch sensor (54) and the adjustable component (70A, 70B), the controller (76) including a processor (78) and a memory (80) having a terrain tracking algorithm (82) stored thereon, wherein the processor (78) is operable to execute the terrain tracking algorithm (82) to:
receive a pitch signal from the pitch sensor (54) indicating the pitch angle (58) of the frame (30) as the traction unit (22) moves over a terrain feature (86) in the ground surface (68);
generate an elevation profile (84) of the ground surface (68) including the terrain feature (86) from the pitch angle (58) of the frame (30) and the wheelbase (48) of the traction unit (22); and
control the adjustable component (70A, 70B) to adjust the ground clearance (66) of the drawn mowing implement (24) to maintain a minimum ground clearance (66) between the support structure (64) of the drawn mowing implement (24) and the ground surface (68) as the drawn mowing implement (24) moves over the terrain feature (86) in the ground surface (68) to avoid contact between the support structure (64) and a terrain feature in the ground surface (68) as the drawn mowing implement (24) moves over the terrain feature.

2. The agricultural work system set forth in claim 1, wherein the adjustable component (70A, 70B) includes a three-point hitch system (70A) interconnecting the traction unit (22) and the drawn implement (24).

3. The agricultural work system set forth in claim 1 or 2, wherein the processor (78) is operable to execute the terrain tracking algorithm (82) to define at least one implement dimension (88A, 88B) relative to the traction unit (22).

4. The agricultural work system according to at least one of the claims 1 to 3, wherein the processor (78) is operable to execute the terrain tracking algorithm (82) to calculate a desired implement position relative to the frame (30) to provide the minimum ground clearance (66) based on the elevation profile (84) of the ground surface (68) and the at least one implement dimension (88A, 88B).

5. The agricultural work system according to at least one of the claims 1 to 4, wherein the processor (78) is operable to execute the terrain tracking algorithm (82) to control the adjustable component (70A, 70B) to move the drawn implement (24) into the desired implement position.

6. The agricultural work system according to at least one of the claims 1 to 5, wherein the traction unit (22) includes a second front ground engaging element (42) laterally offset from the first front ground engaging element (40) across the central longitudinal axis (32) to define a front track width (50) therebetween, and a second rear ground engaging element (46) laterally offset from the first rear ground engaging element (44) across the central longitudinal axis (32) to define a rear track width (52) therebetween.

7. The agricultural work system according to at least one of the claims 1 to 6, further comprising a roll sensor (56) positioned to sense a roll angle (60) of the frame (30) about the central longitudinal axis (32) of the frame (30) relative to the horizontal reference plane.

8. The agricultural work system according to at least one of the claims 1 to 7, wherein the processor (78) is operable to execute the terrain tracking algorithm (82) to:
receive a roll signal from the roll sensor (56) indicating the roll angle (60) of the frame (30) as the traction unit (22) moves over the terrain feature (86) in the ground surface (68); and
generate the elevation profile (84) of the ground surface (68) including the terrain feature (86) from the roll angle (60) of the frame (30) and at least one of the front track width (50) and the rear track width (52) of the traction unit (22).

9. The agricultural work system according to at least one of the claims 1 to 8, wherein the processor (78) is operable to execute the terrain tracking algorithm (82) to generate a three-dimensional profile of the ground surface (68) including the terrain feature (86) from the pitch angle (58) of the frame (30), the roll angle (60) of the frame (30), the wheelbase (48) of the traction unit (22), and at least one of the front track width (50) and the rear track width (52) of the traction unit (22).

## Patentansprüche

1. Landwirtschaftliches Arbeitssystem, umfassend:
eine Zugeinheit (22), die einen Rahmen (30) aufweist, der von einem ersten vorderen Bodenangriffselement (40) und einem ersten hinteren Bodenangriffselement (44) getragen wird, wobei das erste vordere Bodenangriffselement (40) und das erste hintere Bodenangriffselement (44) entlang einer Längsmittelachse (32) des Rahmens (30) voneinander beabstandet sind, um einen Radstand (48) dazwischen zu bilden;
einen Nicksensor (54), der dazu positioniert ist, einen Nickwinkel (58) des Rahmens (30) um eine Quermittelachse (36) des Rahmens (30) relativ zu einer horizontalen Referenzebene zu erfassen;
ein gezogenes Mähanbaugerät (24), das an einem relativ zu einer Vorwärtsfahrtrichtung (28) der Zugeinheit (22) hinteren Ende (26) der Zugeinheit (22) angebracht ist, wobei das gezogene Anbaugerät (24) eine Tragstruktur (64) umfasst, die einen Bodenabstand (66) zwischen der Tragstruktur (64) und einer Bodenfläche (68) aufweist;
eine einstellbare Komponente (70A, 70B), die an mindestens einem der Zugeinheit (22) und des gezogenen Anbaugeräts (24) angebracht ist, wobei die einstellbare Komponente (70A, 70B) gezielt steuerbar ist, um den Bodenabstand (66) des gezogenen Anbaugeräts (24) einzustellen;
eine Steuerung (76) in Kommunikation mit dem Nicksensor (54) und der einstellbaren Komponente (70A, 70B), wobei die Steuerung (76) einen Prozessor (78) und einen Speicher (80), auf dem ein Geländenachverfolgungsalgorithmus (82) gespeichert ist, umfasst, wobei der Prozessor (78) dazu betreibbar ist, den Geländenachverfolgungsalgorithmus (82) zu Folgendem auszuführen:
Empfangen eines Nicksignals von dem Nicksensor (54), das den Nickwinkel (58) des Rahmens (30) anzeigt, während sich die Zugeinheit (22) über ein Geländemerkmal (86) in der Bodenfläche (68) bewegt;
Erzeugen eines Höhenprofils (84) der Bodenfläche (68), die das Geländemerkmal (86) umfasst, aus dem Nickwinkel (58) des Rahmens (30) und dem Radstand (48) der Zugeinheit (22); und
Steuern der einstellbaren Komponente (70A, 70B), um den Bodenabstand (66) des gezogenen Mähanbaugeräts (24) so einzustellen, dass ein Mindestbodenabstand (66) zwischen der Tragstruktur (64) des gezogenen Mähanbaugeräts (24) und der Bodenfläche (68) aufrechterhalten wird, während sich das gezogene Mähanbaugerät (24) über das Geländemerkmal (86) in der Bodenfläche (68) bewegt, um einen Kontakt zwischen der Tragstruktur (64) und einem Geländemerkmal in der Bodenfläche (68) zu vermeiden, während sich das gezogene Mähanbaugerät (24) über das Geländemerkmal bewegt.

2. Landwirtschaftliches Arbeitssystem nach Anspruch 1, wobei die einstellbare Komponente (70A, 70B) ein Dreipunktkupplungssystem (70A) umfasst, das die Zugeinheit (22) und das gezogene Anbaugerät (24) miteinander verbindet.

3. Landwirtschaftliches Arbeitssystem nach Anspruch 1 oder 2, wobei der Prozessor (78) dazu betreibbar ist, den Geländenachverfolgungsalgorithmus (82) auszuführen, um mindestens eine Anbaugeräteabmessung (88A, 88B) relativ zur Zugeinheit (22) zu definieren.

4. Landwirtschaftliches Arbeitssystem nach mindestens einem der Ansprüche 1 bis 3, wobei der Prozessor (78) dazu betreibbar ist, den Geländenachverfolgungsalgorithmus (82) auszuführen, um eine gewünschte Anbaugeräteposition relativ zum Rahmen (30) zum Bereitstellen des Mindestbodenabstands (66) basierend auf dem Höhenprofil (84) der Bodenfläche (68) und der mindestens einen Anbaugeräteabmessung (88A, 88B) zu berechnen.

5. Landwirtschaftliches Arbeitssystem nach mindestens einem der Ansprüche 1 bis 4, wobei der Prozessor (78) dazu betreibbar ist, den Geländenachverfolgungsalgorithmus (82) auszuführen, um die einstellbare Komponente (70A, 70B) so zu steuern, dass das gezogene Anbaugerät (24) in die gewünschte Anbaugeräteposition gezogen wird.

6. Landwirtschaftliches Arbeitssystem nach mindestens einem der Ansprüche 1 bis 5, wobei die Zugeinheit (22) ein zweites vorderes Bodenangriffselement (42), das seitlich von dem ersten vorderen Bodenangriffselement (40) über die Längsmittelachse (32) versetzt ist, um eine vordere Spurweite (50) dazwischen zu definieren, und ein zweites hinteres Bodenangriffselement (46), das seitlich von dem ersten hinteren Bodenangriffselement (44) über die Längsmittelachse (32) versetzt ist, um eine hintere Spurweite (52) dazwischen zu definieren, umfasst.

7. Landwirtschaftliches Arbeitssystem nach mindestens einem der Ansprüche 1 bis 6, ferner umfassend einen Rollsensor (56), der dazu positioniert ist, einen Rollwinkel (60) des Rahmens (30) um die Längsmittelachse (32) des Rahmens (30) relativ zu der horizontalen Referenzebene zu erfassen.

8. Landwirtschaftliches Arbeitssystem nach mindestens einem der Ansprüche 1 bis 7, wobei der Prozessor (78) dazu betreibbar ist, den Geländenachverfolgungsalgorithmus (82) zu Folgendem auszuführen:
Empfangen eines Rollsignals von dem Rollsensor (56), das den Rollwinkel (60) des Rahmens (30) anzeigt, während sich die Zugeinheit (22) über das Geländemerkmal (86) in der Bodenfläche (68) bewegt; und
Erzeugen des Höhenprofils (84) der Bodenfläche (68), die das Geländemerkmal (86) umfasst, aus dem Rollwinkel (60) des Rahmens (30) und mindestens einem der vorderen Spurweite (50) und der hinteren Spurweite (52) der Zugeinheit (22).

9. Landwirtschaftliches Arbeitssystem nach mindestens einem der Ansprüche 1 bis 8, wobei der Prozessor (78) dazu betreibbar ist, den Geländenachverfolgungsalgorithmus (82) auszuführen, um ein dreidimensionales Profil der Bodenfläche (68), die das Geländemerkmal (86) umfasst, aus dem Nickwinkel (58) des Rahmens (30), dem Rollwinkel (60) des Rahmens (30), dem Radstand (48) der Zugeinheit (22) und mindestens einer der vorderen Spurweite (50) und der hinteren Spurweite (52) der Zugeinheit (22) zu erzeugen.

## Revendications

1. Système de travail agricole, comprenant :
une unité de traction (22) pourvue d'un châssis (30) supporté par un premier élément avant venant au contact du sol (40) et un premier élément arrière venant au contact du sol (44), le premier élément avant venant au contact du sol (40) et le premier élément arrière venant au contact du sol (44) étant espacés l'un de l'autre suivant un axe longitudinal central (32) du châssis (30) pour définir entre eux un empattement (48) ;
un capteur d'inclinaison longitudinale (54) positionné de manière à détecter un angle d'inclinaison longitudinale (58) du châssis (30) autour d'un axe transversal central (36) du châssis (30) par rapport à un plan de référence horizontal ;
un outil faucheur tracté (24) attaché à une extrémité arrière (26) de l'unité de traction (22) par rapport à une direction de marche avant (28) de l'unité de traction (22), l'outil tracté (24) comportant une structure support (64) pourvue d'une garde au sol (66) entre la structure support (64) et une surface du sol (68) ;
un composant réglable (70A, 70B) attaché à l'unité de traction (22) et/ou à l'outil tracté (24), le composant réglable (70A, 70B) étant susceptible d'être commandé sélectivement pour régler la garde au sol (66) de l'outil tracté (24) ;
un contrôleur (76) en communication avec le capteur d'inclinaison longitudinale (54) et le composant réglable (70A, 70B), le contrôleur (76) comportant un processeur (78) et une mémoire (80) stockant un algorithme de suivi de terrain (82), le processeur (78) permettant d'exécuter l'algorithme de suivi de terrain (82) pour :
recevoir un signal d'inclinaison longitudinale depuis le capteur d'inclinaison longitudinale (54) indiquant l'angle d'inclinaison longitudinale (58) du châssis (30) tandis que l'unité de traction (22) passe sur un accident de terrain (86) dans la surface du sol (68) ;
générer un profil d'élévation (84) de la surface du sol (68) comportant l'accident de terrain (86) à partir de l'angle d'inclinaison longitudinale (58) du châssis (30) et de l'empattement (48) de l'unité de traction (22) ; et
commander au composant réglable (70A, 70B) de régler la garde au sol (66) de l'outil faucheur tracté (24) pour maintenir une garde au sol minimale (66) entre la structure support (64) de l'outil faucheur tracté (24) et la surface du sol (68) tandis que l'outil faucheur tracté (24) passe sur l'accident de terrain (86) dans la surface du sol (68) pour éviter tout contact entre la structure support (64) et un accident de terrain dans la surface du sol (68) tandis que l'outil faucheur tracté (24) passe sur l'accident de terrain.

2. Système de travail agricole selon la revendication 1, le composant réglable (70A, 70B) comportant un système d'attelage en trois points (70a) reliant entre eux l'unité de traction (22) et l'outil tracté (24).

3. Système de travail agricole selon la revendication 1 ou 2, le processeur (78) permettant d'exécuter l'algorithme de suivi de terrain (82) pour définir au moins une dimension d'outil (88A, 88B) par rapport à l'unité de traction (22).

4. Système de travail agricole selon au moins une des revendications 1 à 3, le processeur (78) permettant d'exécuter l'algorithme de suivi de terrain (82) pour calculer une position d'outil souhaitée par rapport au châssis (30) pour fournir la garde au sol minimale (66) sur la base du profil d'élévation (84) de la surface du sol (68) et de l'au moins une dimension d'outil (88A, 88B) .

5. Système de travail agricole selon au moins une des revendications 1 à 4, le processeur (78) permettant d'exécuter l'algorithme de suivi de terrain (82) pour commander au composant réglable (70A, 70B) de placer l'outil tracté (24) dans la position d'outil souhaitée.

6. Système de travail agricole selon au moins une des revendications 1 à 5, l'unité de traction (22) comportant un deuxième élément avant venant au contact du sol (42) décalé latéralement par rapport au premier élément avant venant au contact du sol (40) de l'autre côté de l'axe longitudinal central (32) pour définir entre eux une largeur de voie avant (50), et un deuxième élément arrière venant au contact du sol (46) décalé latéralement par rapport au premier élément arrière venant au contact du sol (44) de l'autre côté de l'axe longitudinal central (32) pour définir entre eux une largeur de voie arrière (52) .

7. Système de travail agricole selon au moins une des revendications 1 à 6, comprenant en outre un capteur d'inclinaison latérale (56) positionné de manière à détecter un angle d'inclinaison latérale (60) du châssis (30) autour de l'axe longitudinal central (32) du châssis (30) par rapport au plan de référence horizontal.

8. Système de travail agricole selon au moins une des revendications 1 à 7, le processeur (78) permettant d'exécuter l'algorithme de suivi de terrain (82) pour :
recevoir un signal d'inclinaison latérale depuis le capteur d'inclinaison latérale (56) indiquant l'angle d'inclinaison latérale (60) du châssis (30) tandis que l'unité de traction (22) passe sur l'accident de terrain (86) dans la surface du sol (68) ; et
générer le profil d'élévation (84) de la surface du sol (68) comportant l'accident de terrain (86) à partir de l'angle d'inclinaison latérale (60) du châssis (30) et de la largeur de voie avant (50) et/ou de la largeur de voie arrière (52) de l'unité de traction (22).

9. Système de travail agricole selon au moins une des revendications 1 à 8, le processeur (78) permettant d'exécuter l'algorithme de suivi de terrain (82) pour générer un profil tridimensionnel de la surface du sol (68) comportant l'accident de terrain (86) à partir de l'angle d'inclinaison longitudinale (58) du châssis (30), de l'angle d'inclinaison latérale (60) du châssis (30), de l'empattement (48) de l'unité de traction (22), et de la largeur de voie avant (50) et/ou de la largeur de voie arrière (52) de l'unité de traction (22).
